# EUROPÄISCHE PATENTSCHRIFT

(11) **EP 2 373 903 B1**
(45) Veröffentlichungstag und Bekanntmachung des Hinweises auf die Patenterteilung: **17.01.2018**
(21) Anmeldenummer: 09736227.1
(22) Anmeldetag: 16.10.2009
(51) Int. Cl.: F16D 41/20

(54) **GETRIEBE**
GEARING MECHANISM
ENGRENAGE

(30) Priorität: 03.09.2009 DE 102009029167; 08.12.2008 DE 102008054377
(43) Veröffentlichungstag der Anmeldung: 12.10.2011
(73) Patentinhaber: Robert Bosch GmbH, 70442 Stuttgart (DE)
(72) Erfinder: OBERLE, Hans-Juergen, 76437 Rastatt (DE); BRAUN, Roland, 77815 Buehl (DE); BRAUN, Wilhelm, 77815 Buehl (DE); SCHMIDT, Willi, 76297 Stutensee-Buechig (DE); REICHMANN, Siegfried, 77866 Rheinau Freistett (DE)
(86) Internationale Anmeldenummer: PCT/EP2009/063526
(87) Internationale Veröffentlichungsnummer: WO 2010/066490

(56) Entgegenhaltungen:
- WO-A1-2008/105401
- WO-A1-2008/133045
- DE-A1-102005 012 938
- DE-U1-202007 015 597
- US-A1- 2005 115 793
- US-A1- 2006 243 075
- US-A1- 2008 268 964

## Beschreibung

### Stand der Technik

Die Erfindung betrifft ein Getriebe, insbesondere ein Schneckengetriebe für Einrichtungen zur fremdkraftbetätigten Verstellung von Elementen eines Kraftfahrzeugs. Speziell betrifft die Erfindung das Gebiet der Getriebe für Axialantriebe, insbesondere Spindelmotoren, in Einrichtungen zur Sitzverstellung oder dergleichen.

Aus der DE 103 44 211 A1 ist eine Vorrichtung zur Positionseinhaltung einer drehbar oder axial verschiebbar gelagerten Ankerwelle eines Elektromotors bekannt. Dabei ist um die Welle ein Umschlingungskörper angeordnet, der zur Ausbildung eines Reibschlusses zwischen dem Umschlingungskörper und einer Oberfläche der Ankerwelle mit einer Kraft beaufschlagbar ist. Diese Kraft zur Positionseinhaltung wird von einem aktiv betätigbaren Stellglied aufgebracht, das mit einem Ende des Umschlingungskörpers verbunden ist.

Die aus der DE 103 44 211 A1 bekannte Vorrichtung hat den Nachteil, dass eine aktive Betätigung des Stellglieds erforderlich ist, so dass die Ausgestaltung der Vorrichtung retativ aufwändig ist. Zusätzliche Komponenten, insbesondere das Stellglied und Elemente zum Betätigen des Stellglieds, sind ebenfalls erforderlich.

Aus der DE 10 2005 012 938 A1 ist eine Getriebe-Antriebseinheit mit einer Lastdrehmomentsperre bekannt. Die bekannte Getriebe-Antriebseinheit eignet sich besonders für einen Fensterheberantrieb. Die bekannte Getriebe-Antriebseinheit weist einen Elektromotor auf, der ein Getriebe antreibt. Die Lastdrehmomentsperre sperrt die von einem abtriebseitigen Kupplungselement eingeleiteten Drehmomente. Dabei weist die Lastdrehmomentsperre eine Schlingfeder auf. Diese Schlingfeder ist allerdings auf einer drehfesten Welle angeordnet. Die Schlingfeder greift in ein antriebsseitig von einer Rotorwelle des Elektromotors angetriebenes Getriebezahnrad ein.

### Offenbarung der Erfindung

Aus der US 2006/0243075 A1 ist ein Aktor mit einem schnellen Lösemechanismus bekannt. Hierbei ist eine Feder vorgesehen, deren inneres Ende mit einem Lastverbinder verbunden ist. Wenn der äußere Haken der Feder nicht angezogen wird, dann wird eine Rotation verhindert. Dadurch kann ein Drehmoment übertragen werden. Somit kann die Last bewegt werden. Wird jedoch der äußere Haken angezogen, dann verzögert sich der Durchmesser der Feder, so dass eine Rotation ermöglicht wird. Dadurch kann die Last schnell gelöst werden.

Das erfindungsgemäße Getriebe mit den Merkmalen des Anspruchs 1 hat den Vorteil, dass eine vorteilhafte Unterstützung der Selbsthemmeigenschaften ermöglicht ist. Speziell kann eine drehrichtungsabhängige Unterstützung der Selbsthemmeigenschaften eines Antriebs erreicht werden.

Durch die in den Unteransprüchen aufgeführten Maßnahmen sind vorteilhafte Weiterbildungen des im Anspruch 1 angegebenen Getriebes möglich.

Vorteilhaft ist es, dass der Umschlingungskörper zumindest abschnittsweise an der Welle anliegt, dass der an dem ersten Ende ortsfest zu dem Gehäuseteil fixierte, federelastische Umschlingungskörper bei einer in der ersten Drehrichtung erfolgenden Rotation der Welle in der ersten Drehrichtung so gedehnt wird, dass sich ein Querschnitt des Umschlingungskörpers verringert und/oder eine Andruckkraft des Umschlingungskörpers an die Welle zunimmt, und dass der an dem ersten Ende ortsfest zu dem Gehäuseteil fixierte, federelastische Umschlingungskörper bei einer in der zweiten Drehrichtung erfolgenden Rotation der Welle in der zweiten Drehrichtung so gestaucht wird, dass sich ein Querschnitt des Umschlingungskörpers vergrößert und/oder eine Andruckkraft des Umschlingungskörpers an die Welle abnimmt. Dabei ist es ferner vorteilhaft, dass sich bei der in der zweiten Drehrichtung erfolgenden Rotation der Welle der Querschnitt des Umschlingungskörpers so vergrößert, dass ein Spiel zwischen dem Umschlingungskörper und der Welle besteht. Hierdurch kann in vorteilhafter Weise eine drehrichtungsabhängige Selbsthemmung des Getriebes durch den Umschlingungskörper erzielt werden. Hierbei kann der Umschlingungskörper auf Grund einer Reibung zwischen dem Umschlingungskörper und der Welle gedehnt oder gestaucht werden, wodurch die Reibungskraft zunimmt oder abnimmt, was die Selbsthemmung verursacht.

Vorteilhaft ist es, dass der Umschlingungskörper einen ersten Schenkel aufweist, an dem das ortsfest zu dem Gehäuseteil fixierte erste Ende vorgesehen ist. Ferner ist es vorteilhaft, dass der federelastische Umschlingungskörper ein zweites Ende aufweist, dass ein ortsfest zu dem Gehäuseteil positionierter erster Anschlag für das zweite Ende des federelastischen Umschlingungskörpers vorgesehen ist und dass der erste Anschlag bei einer in der ersten Drehrichtung erfolgenden Rotation der Welle eine Bewegung des zweiten Endes des federelastischen Umschlingungskörpers in der ersten Drehrichtung begrenzt. Dadurch kann das Ausmaß einer Dehnung des federelastischen Umschlingungskörpers begrenzt werden, wodurch auch die Reibungskraft zwischen dem Umschlingungskörper und der Welle begrenzt ist, welche die Selbsthemmung verursacht. Dadurch kann ein unerwünschtes Blockieren der Welle verhindert werden. Ferner ist eine Berücksichtigung des begrenzten Drehmoments eines Elektromotors oder dergleichen möglich. Eine gewünschte Verstellung der Welle mittels des Elektromotors ist dadurch innerhalb der Kenndaten des Elektromotors möglich. Die Position des ersten Anschlags kann dabei in Bezug auf die maximale, gewünschte Selbsthemmung vorgegeben und an das Drehmoment des Elektromotors oder dergleichen angepasst werden.

Vorteilhaft ist es auch, dass der Umschlingungskörper mehrfach um die Welle geführt ist, so dass der federelastische Umschlingungskörper die Welle mehrfach umschlingt. Dadurch ist zum einen eine vorteilhafte Anordnung des Umschlingungskörpers an der Welle möglich, wobei sich insbesondere eine Ausrichtung des Umschlingungskörpers an der Welle ergibt. Außerdem sind innerhalb gewisser Grenzen definierte Verhältnisse in Bezug auf die entstehende Reibungskraft zwischen dem Umschlingungskörper und der Welle vorgegeben, so dass eine zuverlässige Funktion gewährleistet ist.

Vorteilhaft ist es auch, dass der federelastische Umschlingungskörper ein zweites Ende aufweist, dass ein ortsfest zu dem Gehäuseteil positionierter zweiter Anschlag für das zweite Ende des federelastischen Umschlingungskörpers vorgesehen ist und dass der zweite Anschlag bei einer in der zweiten Drehrichtung erfolgenden Rotation der Welle eine Bewegung des zweiten Endes des federelastischen Umschlingungskörpers in der zweiten Drehrichtung begrenzt. Hierdurch kann eine übermäßige Aufweitung des Umschlingungskörpers verhindert werden. Allerdings kann auch eine gewisse minimale Reibungskraft zwischen dem Umschlingungskörper und der Welle erzielt werden, wenn die Welle wieder in der ersten Drehrichtung rotiert. Dadurch ist gewissermaßen ein rasches Ansprechen der Selbsthemmung gewährleistet. Dies kann auch einen unerwünschten Leerlauf der Welle in dem Umschlingungskörper beim Umschalten in die erste Drehrichtung verhindern.

Entsprechend einer vorteilhaften Ausgestaltung ist ein Umschlingungskörper vorgesehen, der die Welle umschlingt, wobei der Umschlingungskörper als federelastischer Umschlingungskörper ausgestaltet ist, wobei eine nach innen orientierte Reibfläche vorgesehen ist und wobei der Umschlingungskörper zum Zusammenwirken mit der Reibfläche zumindest abschnittsweise innerhalb der nach innen orientierten Reibfläche angeordnet ist. Speziell bei dieser Ausgestaltung können in vorteilhafter Weise Weiterbildungen erfolgen.

Das Getriebe kann beispielsweise bei einem Axialantrieb zum Einsatz kommen. Unabhängig vom Verstellbetrieb soll solch ein Axialantrieb so konzipiert sein, dass er nach dem Abschalten des Motors seine Position möglichst nicht verlässt. Beispielsweise soll ein Sitz oder dergleichen bei einer Fahrt über eine Rüttelstrecke in seiner Position verharren. Kommt es jedoch zum Ablaufen des Axialantriebs, beispielsweise bei einer Fahrt über eine Rüttelstrecke, dann senkt sich der Sitz nach und nach ab, was unerwünscht ist. Diese beiden Anforderungen zielen jedoch konstruktiv auf einander ausschließende Maßnahmen. Zum einen soll sich ein Sitz oder dergleichen möglichst leicht anheben lassen, was durch einen guten Wirkungsgrad des Systems in Aufwärtsrichtung erreicht werden kann. Zum anderen wird eine möglichst hohe Selbsthemmung gefordert, was durch eine schlechten Wirkungsgrad des Systems in Abwärtsrichtung erreicht werden kann. Um einem Ablaufen entgegen zu wirken, ist es denkbar, dass den Wirkungsgrad verschlechternde Maßnahmen, wie z.B. Bremselemente, zum Einsatz kommen. Solche Bremselemente wirken aber in beide Bewegungsrichtungen des Antriebs, so dass auch das Anheben des Sitzes behindert wird. Dies verschlechtert den Wirkungsgrad des Systems in Aufwärtsrichtung. Somit muss über ein höheres Drehmoment am Motorteil das Bremsmoment in Aufwärtsrichtung kompensiert werden, was einen höheren Materialeinsatz und somit auch ein höheres Gewicht bedingt. Als Materialien können beispielsweise Eisen, Kupfer und magnetische Materialien zum Einsatz kommen.

Somit ist beispielsweise für einen Verstellbetrieb für einen Sitz, der durch einen Axialantrieb realisiert wird, ein System vorteilhaft, das in der Aufwärtsbewegung möglichst ohne Einfluss auf den Gesamtwirkungsgrad des Sitzverstellantriebs ist und bei Kraftumkehr, also in einem Fall, in dem das System in Abwärtsrichtung belastet wird, die Selbsthemmung unterstützt. Dies kann in vorteilhafter Weise durch den federelastischen Umschlingungskörper realisiert werden.

Ferner sind auch Systeme denkbar, bei denen im Stillstand eine relativ hohe Selbsthemmung erzielt ist, die sich reduziert, wenn der Axialantrieb in eine beliebige Richtung arbeitet.

Somit können je nach Ausgestaltung ein oder mehrere Vorteile realisiert werden. Es können drehrichtungsabhängig im Antrieb unterschiedliche, den jeweiligen Anforderungen entsprechende Wirkungsgrade erzielt werden. Möglich ist es auch, dass drehzahlabhängig, aber drehrichtungsunabhängig im Antrieb unterschiedliche Wirkungsgrade erzielt werden. Ferner kann eine vorteilhafte Auslegung eines Motors ermöglicht werden, insbesondere mit optimiertem Drehmoment, da keine Vergrößerung des Motordrehmoments zur Kompensation von Wirkungsgradverlusten auf Grund erhöhter Selbsthemmanforderungen erforderlich ist.

Vorteilhaft ist es, dass die nach innen orientierte Reibfläche zumindest teilweise als zylindermantelförmige Reibfläche ausgestaltet ist. Hierdurch wird eine vorteilhafte Zusammenwirkung des federelastischen Umschlingungskörpers mit der Reibfläche erzielt. Hierbei kann auch eine gewisse Toleranz durch eine vergrößerte Reibfläche geschaffen werden, so dass beispielsweise bei entlang einer Achse erfolgenden Verstellungen des Umschlingungskörpers weiterhin eine zuverlässige Selbsthemmung erzielt ist.

Vorteilhaft ist es auch, dass die nach innen orientierte Reibfläche an einer Reibbuchse ausgestaltet ist und dass die Reibbuchse bezüglich des Gehäuseteils, in dem die Welle gelagert ist, drehfest angeordnet ist. Speziell ist es hierbei vorteilhaft, dass die Reibbuchse mit dem Gehäuseteil verbunden ist. Die Reibbuchse kann hierbei in vorteilhafter Weise zugleich als Lagerbuchse für die Welle dienen. Hierdurch ist eine optimierte Ausgestaltung des Getriebes möglich. Ferner erfolgt eine zuverlässige Zentrierung der Reibfläche in Bezug auf die Welle.

Vorteilhaft ist es, dass bei einer in der ersten Drehrichtung erfolgenden Rotation der Welle der Umschlingungskörper abschnittsweise so gedehnt wird, dass sich ein Querschnitt des Umschlingungskörpers an der Welle verringert und/oder eine Andruckkraft des Umschlingungskörpers an der Welle zunimmt. Je nach Ausgestaltung und Auslegung ist hierbei auch der Fall möglich, dass der Umschlingungskörper bei entsprechend großer Andruckkraft auf der Welle fest sitzt. Speziell kann hierbei etwa die Hälfte des federelastischen Umschlingungskörper so gedehnt werden, dass sich der Querschnitt des Umschlingungskörpers in dieser Hälfte verringert und/oder die Andruckkraft des Umschlingungskörpers an die Welle zunimmt.

Vorteilhaft ist es ferner, dass bei einer in der ersten Drehrichtung erfolgenden Rotation der Welle der Umschlingungskörper abschnittsweise so gedehnt wird, dass sich ein Querschnitt des Umschlingungskörpers an der Reibfläche verringert und/oder eine Andruckkraft des Umschlingungskörpers an der Reibfläche abnimmt. Je nach Ausgestaltung und Auslegung ist hierbei auch der Fall möglich, dass der Umschlingungskörper an der Reibfläche im Wesentlichen reibungsfrei durchrutscht. Speziell kann die andere Hälfte des Umschlingungskörpers, die an der Reibfläche angeordnet ist, so gedehnt werden, dass sich der Querschnitt dieser Hälfte des Umschlingungskörpers verringert und/oder eine Andruckkraft des Umschlingungskörpers an der Reibfläche abnimmt.

Vorteilhaft ist es, dass der Umschlingungskörper abschnittsweise an der Welle und gegebenenfalls von der Reibfläche beabstandet und abschnittsweise gegebenenfalls von der Welle beabstandet und an der Reibfläche angeordnet ist. Speziell kann eine Hälfte des Umschlingungskörpers an der Welle angeordnet sein, während die andere Hälfte des Umschlingungskörpers an der Reibfläche angeordnet ist. Hierbei ist es ferner vorteilhaft, dass der Umschlingungskörper zumindest in einem Ausgangszustand in dem an der Welle angeordneten Abschnitt einen kleineren Querschnitt und in dem an der Reibfläche angeordneten Abschnitt einen größeren Querschnitt aufweist.

Vorteilhaft ist es auch, dass bei einer in der zweiten Drehrichtung erfolgenden Rotation der Welle der Umschlingungskörper abschnittsweise so gestaucht wird, dass sich ein Querschnitt des Umschlingungskörpers an der Welle vergrößert und/oder eine Andruckkraft des Umschlingungskörpers an der Welle abnimmt. Hierbei kann je nach Auslegung auch ein Durchrutschen des Umschlingungskörpers an der Welle erzielt werden. Ferner ist es vorteilhaft, dass bei einer in der zweiten Drehrichtung erfolgenden Rotation der Welle der Umschlingungskörper so gestaucht wird, dass sich ein Querschnitt des Umschlingungskörpers an der Reibfläche vergrößert und/oder eine Andruckkraft des Umschlingungskörpers an der Reibfläche zunimmt. Hierbei kann je nach Auslegung auch ein Festsitzen des Umschlingungskörpers an der Reibfläche erzielt werden.

Das Getriebe kann durch die Auslegung und Ausgestaltung des Umschlingungskörpers sowie der Welle und der Reibfläche angepasst werden. Speziell können die Durchrutschmomente an der Welle und der Reibfläche in Abhängigkeit der Drehrichtung unterschiedlich ausgelegt werden. Hierdurch kann mittels des Umschlingungskörpers eine Bremse realisiert werden, die drehrichtungsabhängig unterschiedliche Bremsmomente aufbringt.

Vorteilhaft ist es, dass der Umschlingungskörpers in einem Ausgangszustand gegenüber der Welle eine Vorspannung aufweist und gegenüber der Reibfläche eine Vorspannung aufweist. Ferner ist es vorteilhaft, dass die im Ausgangszustand vorgesehenen Vorspannungen des Umschlingungskörpers gegenüber der Welle und gegenüber der Reibfläche unterschiedlich groß vorgegeben sind. Hierdurch können bereits im Ausgangszustand Bremsmomente erzeugt werden. Ferner können die Bremsmomente drehrichtungsabhängig unterschiedlich groß sein.

In vorteilhafter Weise kann zwischen dem als Feder wirkenden Umschlingungskörper und der Reibfläche beispielsweise ein größeres Bremsmoment durch eine größere Überdeckung erreicht werden und zwischen dem Umschlingungskörper und der Welle ein kleineres Bremsmoment durch eine kleinere Überdeckung erreicht werden. Die Überdeckung gibt hierbei die Differenz zwischen dem Außendurchmesser des Umschlingungkörper und dem Durchmesser der Reibfläche beziehungsweise zwischen dem Innendurchmesser des Umschlingungskörpers und dem Durchmesser der Welle im Sinne eines Übermaßes an. Dies ermöglicht die Vorgabe drehrichtungsabhängiger Drehmomente.

Entsprechend einer möglichen Ausgestaltung des Getriebes ist in vorteilhafter Weise zumindest ein Bremselement vorgesehen, wobei die Welle eine Bremselement-Aufnahme aufweist, die das Bremselement zumindest teilweise aufnimmt und wobei dem Bremselement zum Zusammenwirken mit dem Bremselement eine Kontaktfläche zugeordnet ist. Hierbei können auch mehrere Bremselemente vorgesehen sein. Speziell ist es vorteilhaft, dass bezüglich einer Drehachse der Welle dem Bremselement ein gegenüberliegendes weiteres Bremselement zugeordnet ist. Vorteilhaft ist es auch, dass mehrere Bremselemente gleichmäßig um den Umfang der Welle verteilt vorgesehen sind.

Vorteilhaft ist es, dass eine Lagerfläche vorgesehen ist, die die Kontaktfläche aufweist, und dass die Welle an der Lagerfläche in dem Gehäuseteil gelagert ist. Hierdurch ist zum einen eine kompakte Ausgestaltung realisiert. Zum anderen ist eine zuverlässige Zentrierung der Kontaktfläche bezüglich des Bremselements gegeben.

In vorteilhafter Weise ist die Bremselement-Aufnahme durch eine in der Welle ausgebildete Aussparung gebildet. In diese Aussparung kann in vorteilhafter Weise das Bremselement eingesetzt sein.

Vorteilhaft ist es, dass das Bremselement eine Feder und einen Bremskeil aufweist und dass die Feder den Bremskeil in Richtung auf die Kontaktfläche mit einer Federkraft beaufschlagt. Hierdurch ist unabhängig von der momentanen Drehstellung der Welle ein Kontakt des Bremskeils mit der Kontaktfläche gewährleistet, wobei eine gewisse Mindesthaftreibung durch eine Vorspannung der Feder erzielt werden kann.

Ferner ist es vorteilhaft, dass das Bremselement als einstückiges Bremselement ausgestaltet ist, dass das Bremselement einen keilförmigen Teil aufweist, der als Bremskeil dient, dass das Bremselement einen federnden Teil aufweist, der als Feder dient, und dass der federnde Teil den keilförmigen Teil in Richtung auf die Kontaktfläche mit einer Federkraft beaufschlagt. Beispielsweise kann das Bremselement aus einem gebogenen Metallstück gebildet sein. Hierbei ist eine einfache Montage, eine kostengünstige Ausgestaltung und eine hohe Zuverlässigkeit gewährleistet.

Vorteilhaft ist es auch, dass bei einer in der ersten Drehrichtung erfolgenden Rotation der Welle der Bremskeil durch die Zusammenwirkung des Bremselements mit der Kontaktfläche aus der Bremselement-Aufnahme herausgezogen wird und/oder eine Andruckkraft des Bremskeils an die Kontaktfläche zunimmt. Bei der Rotation in der ersten Drehrichtung nimmt die Kontaktfläche den Bremskeil gewissermaßen mit, wodurch sich die Reibungskraft zwischen der Kontaktfläche und dem Bremskeil vergrößert. Je nach Auslegung kann auch ein Blockieren der Welle erzielt werden.

Vorteilhaft ist es ferner, dass bei einer in der zweiten Drehrichtung erfolgenden Rotation der Welle der Bremskeil durch die Zusammenwirkung des Bremselements mit der Kontaktfläche in die Bremselement-Aufnahme hineingedrückt wird und/oder eine Andruckkraft des Bremskeils an die Kontaktfläche abnimmt. Beim Rotieren in der zweiten Drehrichtung wird der Bremskeil gewissermaßen durch die Kontaktfläche gegen die Federkraft der Feder in die Bremselement-Aufnahme, insbesondere die Ausnehmung, hineingedrückt. Je nach Auslegung und Ausgestaltung kann hierbei ein zumindest im Wesentlichen reibungsfreies Freilaufen der Welle erzielt werden. Beim Anhalten der Welle wird dann durch die Federkraft wieder ein Kontakt zwischen dem Bremskeil und der Kontaktfläche zum Bremsen beziehungsweise Anhalten im Hinblick auf eine mögliche Rotation in der ersten Drehrichtung erzielt. Hierdurch kann bei einem Drehrichtungswechsel ein unerwünschtes Durchrutschen verhindert werden.

Bevorzugte Ausführungsbeispiele der Erfindung sind in der nachfolgenden Beschreibung anhand der beigefügten Zeichnungen, in den sich entsprechende Elemente mit übereinstimmenden Bezugszeichen versehen sind, näher erläutert. Es zeigt:
Fig. 1 eine schematische, axiale Schnittdarstellung eines Getriebes entsprechend einem ersten Ausführungsbeispiel der Erfindung und
Fig. 2 eine auszugsweise, schematische Schnittdarstellung durch das in Fig. 1 gezeigte Getriebe des ersten Ausführungsbeispiels entlang der mit II bezeichneten Schnittlinie;
Fig. 3 den in Fig. 2 dargestellten auszugsweisen Schnitt durch das Getriebe des ersten Ausführungsbeispiels bei einer Rotation einer Welle in einer zweiten Drehrichtung;
Fig. 4 den in Fig. 2 gezeigten Schnitt durch das Getriebe des ersten Ausführungsbeispiels bei einer Rotation der Welle in einer ersten Drehrichtung;
Fig. 5 eine schematische, axiale Schnittdarstellung eines Getriebes entsprechend einem zweiten Ausführungsbeispiel der Erfindung;
Fig. 6 eine schematische, axiale Schnittdarstellung eines Getriebes entsprechend einem dritten Ausführungsbeispiel der Erfindung;
Fig. 7 eine auszugsweise, schematische Schnittdarstellung durch das in Fig. 6 gezeigte Getriebe des dritten Ausführungsbeispiels entlang der mit VII bezeichneten Schnittlinie und
Fig. 8 den in Fig. 6 dargestellten auszugsweisen Schnitt durch das Getriebe entsprechend einem vierten Ausführungsbeispiel der Erfindung.

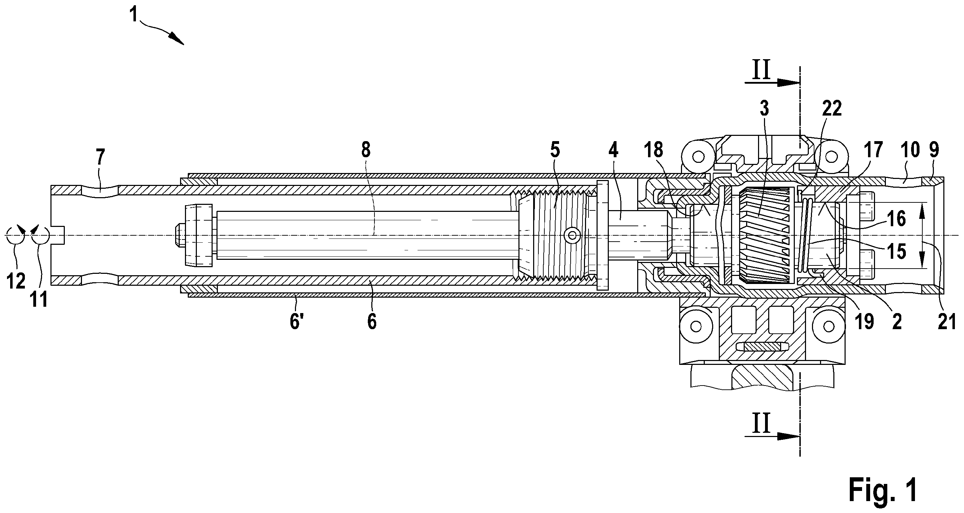

Fig. 1 zeigt ein Getriebe 1 in einer auszugsweisen, axialen, schematischen Schnittdarstellung entsprechend einem ersten Ausführungsbeispiel der Erfindung. Das Getriebe 1 ist in diesem Ausführungsbeispiel als Schneckengetriebe ausgestaltet und eignet sich besonders für Einrichtungen zur fremdkraftbetätigten Verstellung von Elementen eines Kraftfahrzeugs. Speziell eignet sich das Getriebe 1 für eine Einrichtung zur Sitzverstellung, insbesondere Sitzhöhenverstellung. Das erfindungsgemäße Getriebe 1 eignet sich jedoch auch für andere Anwendungsfälle.

In der Fig. 1 ist das Getriebe 1 in Form einer Spindelbaugruppe dargestellt. Das Getriebe 1 weist ein Schneckenrad 2 auf, das über eine Schneckenverzahnung 3 von einem nicht dargestellten Elektromotor, auf dessen Rotorwelle sich eine mit der Schneckenradverzahnung korrespondierende Schnecke befindet, angetrieben wird. Das Schneckenrad 2 ist dabei drehfest mit einer Spindel 4 verbunden. Auf der Spindel 4 ist eine Spindelmutter 5 angeordnet, die drehfest mit einem Adapter 6 verbunden ist. An dem Adapter 6 ist in diesem Ausführungsbeispiel eine Befestigungsbohrung 7 vorgesehen, die eine Schnittstelle bildet. Die Spindelmutter 5 ist entlang einer Achse 8 der Spindel 4 verfahrbar.

Der Adapter 6 ist abschnittsweise von einem Führungsrohr 6' umgeben. Dabei kann der Adapter 6 bei einer Betätigung aus dem Führungsrohr 6' ausgefahren oder in das Führungsrohr 6' eingefahren werden.

Außerdem ist ein Mantelrohr 9 vorgesehen, das eine Befestigungsbohrung 10 aufweist. Durch die Befestigungsbohrung 10 des Mantelrohrs 9 ist eine weitere Schnittstelle vorgegeben, die dem Adapter 6 abgewandt ist.

Das Führungsrohr 6' und das Mantelrohr 9 sind in diesem Ausführungsbeispiel zweiteilig, das heißt aus zwei Teilen, ausgebildet. Das Mantelrohr 9 dient hauptsächlich zur Lagerung und Befestigung. Das Führungsrohr 6' stützt den Adapter 6 bei großen Druckkräften ab.

Somit bildet das Führungsrohr 6' einen Knickschutz für den Adapter 6. Allerdings ist es auch möglich, dass das Führungsrohr und das Mantelrohr 9 einteilig, das heißt aus einem einzigen Teil, ausgebildet sind.

In dem Mantelrohr 9 ist das Schneckenrad 2 gelagert. Der Adapter 6 und das Mantelrohr 9 sind bezüglich der Achse 8 drehfest mit den gewünschten Strukturen verbunden. In Abhängigkeit von der Drehrichtung des Schneckenrads 2 bewegt sich die Spindelmutter 5 und mit ihr der Adapter 6 entlang der Achse 8 relativ zu dem Mantelrohr 9.

Beispielsweise kann der Adapter 6 aus dem Führungsrohr 6' ausgefahren werden, um im Rahmen einer Sitzhöhenverstellung ein Anheben eines Sitzes zu ermöglichen. Ein Elektromotor, der über das Getriebe 1 wirkt, muss dabei neben den sich aus der Sitzstruktur ergebenden Widerständen, insbesondere Gewicht und Reibung, auch die Gewichtskraft einer auf dem Sitz sitzenden Person überwinden. In der Aufwärtsbewegung, das heißt in diesem Fall beim Ausfahren des Adapters 6, muss der Elektromotor also eine Kraft aufbringen, die größer ist als die Summe der auf die Sitzstruktur wirkenden Kräfte und der Gewichtskraft der Person. Andererseits wird der Elektromotor bei einer Abwärtsbewegung des Sitzes, bei der der Adapter 6 in das Führungsrohr 6' einfährt, von den Gewichtskräften in seiner Bewegungsrichtung unterstützt. Somit reduziert sich die zum Absenken benötigte Kraft um die Gewichtskraft der Person und die Gewichtskraft des Sitzes. Abhängig von den Reibungsverhältnissen kann es sogar dazu kommen, dass der Antrieb vom treibenden in den getriebenen Zustand übergeht.

Allerdings ist das Getriebe 1 des Ausführungsbeispiels so ausgestaltet, dass beim Einfahren des Adapters 6 in das Führungsrohr 6' eine zusätzliche Selbsthemmung auftritt. Dadurch kann zum einen ein guter Wirkungsgrad erzielt werden, der sich beim Anheben eines Sitzes oder dergleichen günstig auswirkt. Zum anderen kann eine Selbsthemmung gewährleistet werden, um ein unbeabsichtigtes Absenken eines Sitzes oder dergleichen zu verhindern. Speziell ist es möglich, dass nach dem Abschalten des Elektromotors der Sitz seine Position beibehält, auch wenn eine Fahrt über eine Rüttelstrecke oder dergleichen erfolgt, wobei die Gefahr eines Ablaufens besteht.

Die Funktionsweise des Getriebes 1 zur Erzielung einer drehrichtungsabhängigen Selbsthemmung ist im Folgenden anhand der Fig. 1 bis 4 im weiteren Detail beschrieben.

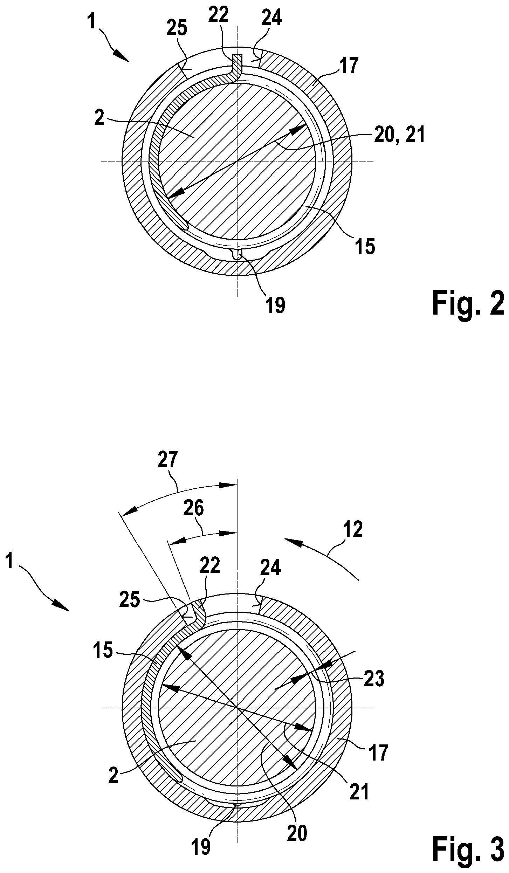

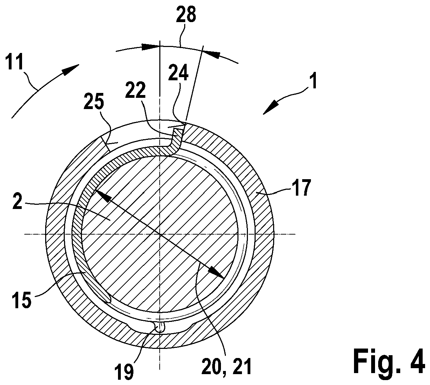

Fig. 2 bis 4 zeigen auszugsweise Schnitte durch das in Fig. 1 dargestellte Getriebe 1 entlang der mit II bezeichneten Blickrichtung. Dabei zeigt die Fig. 2 einen unbelasteten Ausgangszustand des Getriebes 1. In der Fig. 3 ist ein Zustand dargestellt, in dem das Schneckenrad 2 des Getriebes 1 in einer zweiten Drehrichtung 12 rotiert, was beispielsweise dem Heben eines Sitzes, wenn der Adapter 6 aus dem Führungsrohr 6' ausfährt, entspricht. In der Fig. 4 ist eine Situation dargestellt, in der das Schneckenrad 2 des Getriebes 1 in einer ersten Drehrichtung 11 rotiert, was beispielsweise einem Senken eines Sitzes entspricht, während dem der Adapter 6 in das Führungsrohr 6' einfährt.

Das Mantelrohr 9 stellt ein Gehäuseteil 9 des Getriebes 1 dar. Das Schneckenrad 2 kann zumindest abschnittsweise als Welle betrachtet werden, die in dem Gehäuseteil 9 gelagert ist. Das Schneckenrad 2 ist in der ersten Drehrichtung 11 und in der zweiten Drehrichtung 12, die der ersten Drehrichtung 11 entgegengesetzt ist, rotierend antreibbar. Dabei ist ein federelastischer Umschlingungskörper 15 vorgesehen, der beispielsweise durch eine Schlingfeder ausgestaltet sein kann. Der federelastische Umschlingungskörper 15 umschlingt die Welle 2 mehrfach. Dabei liegt der Umschlingungskörper 15 abschnittsweise an der Welle 2 an. In diesem Ausführungsbeispiel umschließt der federelastische Umschlingungskörper 15 das Schneckenrad 2 im Bereich einer Lagerstelle 16, in dem das Schneckenrad 2 als Welle 2 betrachtet werden kann. Die Lagerstelle 16 ist dabei durch eine in dem Mantelrohr 9 angeordnete Buchse 17 gebildet. Ferner ist eine weitere Lagerstelle 18 für das Schneckenrad 2 innerhalb des Mantelrohrs 9 vorgegeben, die durch das Mantelrohr 9 gebildet ist.

Der Umschlingungskörper 15 ist drahtförmig ausgestaltet, wobei ein Ende 19 an einem Schenkel des Umschlingungskörpers 15 in der Buchse 17 fixiert ist. Das erste Ende 19 ist dadurch ortsfest zu dem Mantelrohr (Gehäuseteil) 9 fixiert. Um diese Funktion zu gewährleisten, ist die Buchse 17 zumindest drehfest in dem Mantelrohr 9 fixiert.

Der Umschlingungskörper 15 hat eine den Anforderungen angepasste Anzahl an Windungen. In dem in der Fig. 2 dargestellten Ausgangszustand weist der federelastische Umschlingungskörper 15 einen Innendurchmesser 20 auf. Ferner weist die Welle 2 im Bereich der Lagerstelle 16 einen Durchmesser 21 auf. Hierbei liegt der Umschlingungskörper 15 in einem Bereich an der Welle 2 an, in dem die Welle 2 den Durchmesser 21 aufweist. Der Durchmesser 21 der Welle 2 und der Innendurchmesser 20 des Umschlingungskörpers 15 sind aufeinander abgestimmt. Speziell kann der Innendurchmesser 20 des ungespannten Umschlingungskörpers 15 kleiner als der Durchmesser 21 der Welle 2 vorgegeben sein.

Während das erste Ende 19 an dem ersten Schenkel des Umschlingungskörpers 15 drehfest an der Buchse 17 fixiert ist, ist ein zweites Ende 22 an einem zweiten Schenkel des Umschlingungskörpers 15 frei beweglich, wobei diese Beweglichkeit begrenzt sein kann.

Beim Zusammenbau des Getriebes 1 kann die Buchse 17 mit dem federelastischen Umschlingungskörper 15 auf die Welle 2 aufgeschoben werden, wobei sich der Umschlingungskörper 15 bezüglich seines Innendurchmessers 20 etwas aufweitet. Dadurch ist im Ausgangszustand eine gewisse Vorspannung des Umschlingungskörpers 15 vorgebbar.

Fig. 3 zeigt die Situation, in der die Welle 2, das heißt das Schneckenrad 2, in der zweiten Drehrichtung 12 rotiert. Wenn die Welle 2 beispielsweise zunächst steht, wie es der in der Fig. 2 dargestellten Situation entspricht, dann nimmt die Welle 2 auf Grund der Reibung zwischen dem Umschlingungskörper 15 und der Welle 2 den federelastischen Umschlingungskörper 15 etwas in der zweiten Drehrichtung 12 mit. Da der Umschlingungskörper 15 federelastisch ausgestaltet ist, weitet sich dieser auf, wodurch sich der Innendurchmesser 20 gegenüber dem in der Fig. 2 dargestellten Ausgangszustand vergrößert.

Sofern der Umschlingungskörper 15 im Ausgangszustand vorgespannt ist, kommt es zunächst zu einer gewissen Abnahme der Reibungskraft zwischen dem Umschlingungskörper 15 und der Welle 2 und dann zu einer Aufdehnung. Hierbei kann es zu einem gewissen Abstand 23 zwischen dem Umschlingungskörper 15 und der Welle 2 in Form eines Luftspalts kommen.

Beim Rotieren der Welle 2 in der zweiten Drehrichtung 12 ergibt sich auf Grund des zunächst vorgespannten Umschlingungskörper 15 ein gewisses Bremsmoment, das aber auf Grund der Mitnahme des Umschlingungskörpers 15 in der zweiten Drehrichtung 12 abnimmt und gegebenenfalls sogar ganz verschwindet. In dem in der Fig. 3 dargestellten Ausführungsbeispiel sind an der Buchse 17 ein erster Anschlag 24 und ein zweiter Anschlag 25 für das zweite Ende 22 des federelastischen Umschlingungskörpers 15 vorgegeben. Wie in der Fig. 3 dargestellt, wird das zweite Ende 22 des Umschlingungskörpers 15 um einen gewissen Winkel 26 aus seiner Ausgangsstellung mitgenommen. Durch den zweiten Anschlag 25 ist das Ausmaß des Winkels 26 in der zweiten Drehrichtung 12 auf einen maximalen Winkel 27 begrenzt. Der maximale Winkel 27 kann dabei so vorgegeben sein, dass ein verschwindendes Bremsmoment beim Aufweiten des Umschlingungskörpers 15 erreicht werden kann. Allerdings kann der maximale Winkel 27 durch die Position des zweiten Anschlags 25 auch so vorgegeben sein, dass zumindest ein geringfügiges Bremsmoment, das heißt eine gewisse Reibung zwischen dem Umschlingungskörper 15 und der Welle 2, in jedem Fall erreicht ist. Solch eine Ausgestaltung hat den Vorteil, dass bei einer Drehrichtungsänderung von der zweiten Drehrichtung 12 in die erste Drehrichtung 11 eine unverzügliche Mitnahme des zweiten Endes 22 in die erste Drehrichtung 11 erzielt ist. Ein unerwünschtes Freilaufen der Welle 2 in dem Umschlingungskörper 15 kann dadurch verhindert werden.

Fig. 4 zeigt den Zustand, in dem die Welle 2 in der ersten Drehrichtung 11 rotiert. Beispielsweise kann ausgehend von dem in der Fig. 3 dargestellten Zustand eine Drehrichtungsumkehr erfolgen. Hierbei wird das zweite Ende 22 des Umschlingungskörper 15 in der ersten Drehrichtung 11 mitgenommen, wobei die Reibungskraft zwischen dem Umschlingungskörper 15 und der Welle 2 zunimmt, da der Umschlingungskörper 15 in der ersten Drehrichtung 11 gedehnt wird, so dass er sich enger um die Welle 2 schlingt bzw. die Andruckkraft erhöht wird. Diese Zunahme des Reibmoments setzt sich fort, bis das zweite Ende 22 des Umschlingungskörpers 15 in Anlage mit dem ersten Anschlag 24 der Buchse 17 gelangt. Der erste Anschlag 24 begrenzt sozusagen das Bremsmoment auf einen maximalen Wert. In diesem Ausführungsbeispiel ist ein maximaler Winkel 28 vorgegeben, um den eine Verdrehung des zweiten Endes 22 aus der in der Fig. 2 dargestellten Grundstellung möglich ist.

Die Position des ersten Anschlags 24 und somit der maximale Winkel 28 sind in Bezug auf den jeweiligen Anwendungsfall vorgegeben. Beispielsweise kann der Sitzverstellantrieb beim Senken, das heißt bei einer Drehung der Welle 2 in der ersten Drehrichtung 11, von der Gewichtskraft des Sitzes und der Gewichtskraft einer Person unterstützt werden, so dass ein Elektromotor ohne Komforteinbuße auch ein gewisses zusätzliches Bremsmoment, das durch die Reibung zwischen dem Umschlingungskörpers 15 und der Welle 2 verursacht ist, überwinden kann. Dadurch kann der maximale Winkel 28 gegebenenfalls relativ groß sein. In anderen Anwendungsfällen kann diese Unterstützung allerdings geringer sein, wodurch der maximale Winkel 28 eher klein vorgegeben ist.

Speziell ist es möglich, dass der maximale Winkel 28 verschwindet, das heißt, dass ein maximaler Winkel 28 von 0° vorgegeben ist. In diesem Fall ist überhaupt keine zusätzliche Verdrehung des Umschlingungskörpers 15 aus der in der Fig. 2 dargestellten Grundstellung in der ersten Drehrichtung 11 möglich. Dies bedeutet, dass das im Grundzustand erzeugte Bremsmoment nicht weiter gesteigert werden kann.

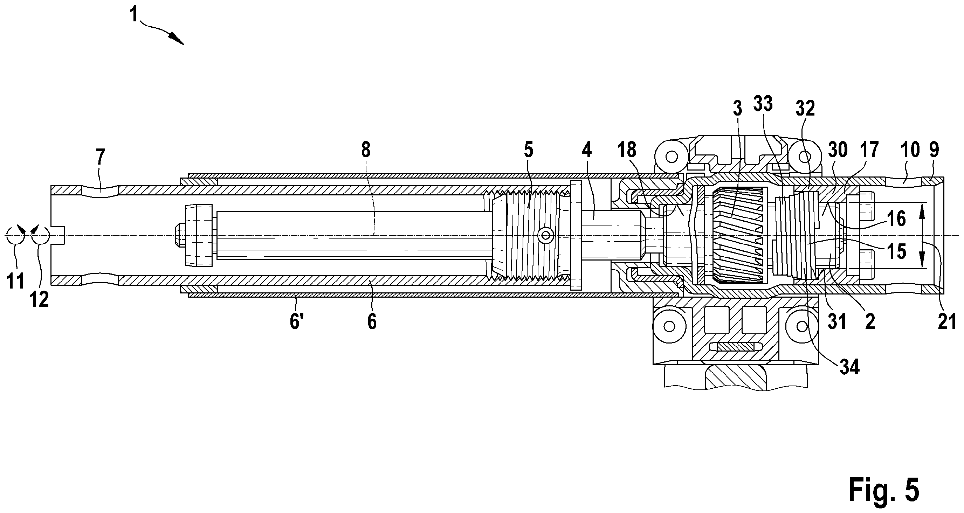

Fig. 5 zeigt ein Getriebe 1 in einer auszugsweisen, axialen, schematischen Schnittdarstellung entsprechend einem zweiten Ausführungsbeispiel. Das Getriebe 1 ist in diesem Ausführungsbeispiel ebenfalls als Schneckengetriebe ausgestaltet. In diesem Ausführungsbeispiel dient die Buchse 17 zum Lagern der Welle 2. Hierbei ist die Welle 2 in einem Teil 30 der Buchse 17 gelagert. Diesbezüglich hat die Buchse 17 die Funktion einer Lagerbuchse 17.

Außerdem weist die Buchse 17 eine Reibfläche 31 auf. Die Reibfläche 31 ist hierbei an einem Teil 32 der Buchse 17 ausgestaltet. Hierbei ist ein Innendurchmesser der Buchse 17 im Bereich des Teils 32 größer als im Bereich des Teils 30. Die Buchse 17 hat in Bezug auf die Reibfläche 31 die Funktion einer Reibbuchse 17.

Die Buchse 17 ist drehfest mit dem Mantelrohr 9 verbunden.

Der federelastische Umschlingungskörper 15 weist in diesem Ausführungsbeispiel einen Abschnitt 33 und einen Abschnitt 34 auf. Hierbei können die Abschnitte 33, 34 beispielsweise jeweils die Hälfte des Umschlingungskörpers 15 umfassen. Es ist allerdings auch eine andere Aufteilung möglich. In dem Abschnitt 33 ist der Umschlingungskörper 15 an der Welle 2 angeordnet. In dem Abschnitt 34 ist der Umschlingungskörper 15 an der Reibfläche 31 angeordnet. In diesem Ausführungsbeispiel weist der federelastische Umschlingungskörper 15 im Abschnitt 34 einen größeren Durchmesser und somit Querschnitt als im Abschnitt 33 auf. Speziell ist der federelastische Umschlingungskörper 15 im Abschnitt 34 beabstandet zu der Welle 2.

Der federelastische Umschlingungskörper 15 dient in diesem Ausführungsbeispiel als Rutschkupplung. Hierbei wirkt die Oberfläche der Welle 2 im Bereich des Abschnitts 33 mit dem Abschnitt 33 des federelastischen Umschlingungskörpers 15 zusammen. Ferner wirkt die nach innen orientierte Reibfläche 31 der Reibbuchse 17 mit dem Abschnitt 34 des federelastischen Umschlingungskörpers 15 zusammen. Im ungespannten Ausgangszustand kann der Durchmesser des federelastischen Umschlingungskörpers 15 im Abschnitt 33 kleiner sein als der Durchmesser 21 der Welle 2. Ferner kann der Abschnitt 34 des Umschlingungskörpers 15 im ungespannten Ausgangszustand einen Durchmesser aufweisen, der größer ist als ein Innendurchmesser der zylindermantelförmig ausgestalteten Reibfläche 31. Speziell bei stehender Welle 2 besteht somit eine Haftreibung einerseits zwischen dem Abschnitt 33 und der Außenseite der Welle 2 und andererseits zwischen dem Abschnitt 34 und der Reibfläche 31. Hierbei liegt der Umschlingungskörper 15 innen an der Welle 2 und außen an der Reibfläche 31 an.

Wenn die Welle 2 in der ersten Drehrichtung 11 rotiert, dann wird der Abschnitt 33 des Umschlingungskörpers 15 so gedehnt, dass sich der Querschnitt des Umschlingungskörpers 15 verringert und/oder eine Andruckkraft des Umschlingungskörpers 15 an die Welle 2 zunimmt. Hierbei kann auch erreicht werden, dass der Umschlingungskörper 15 auf der Welle 2 fest sitzt. Der andere Abschnitt 34 des Umschlingungskörpers 15 wird so gedehnt, dass sich der Querschnitt des Umschlingungskörpers 15 verringert und/oder eine Andruckkraft des Umschlingungskörpers 15 an der Reibfläche 31 der Buchse 17 abnimmt. Somit rutscht der Umschlingungskörper 15 an der Reibfläche 31 der Buchse 17 durch.

Wenn die Welle 2 in der zweiten Drehrichtung 12 rotiert, dann wird der Abschnitt 33 des Umschlingungskörpers 15 so gestaucht, dass sich ein Querschnitt des Umschlingungskörpers 15 vergrößert und/oder eine Andruckkraft des Umschlingungskörpers 15 an der Welle 2 abnimmt. Somit rutscht der Umschlingungskörper 15 an der Welle 2 durch. Im Abschnitt 34 wird der Umschlingungskörper 15 so gestaucht, dass sich der Querschnitt des Umschlingungskörpers 15 vergrößert und/oder eine Andruckkraft des Umschlingungskörpers 15 an die Reibfläche 31 der Buchse 17 zunimmt. Somit stützt sich der Umschlingungskörper 15 auf der Reibfläche 31 der Buchse 17 ab.

Die jeweils auftretenden Durchrutschmomente können in Abhängigkeit der Drehrichtung, nämlich entweder der ersten Drehrichtung 11 oder der zweiten Drehrichtung 12, unterschiedlich ausgelegt werden. Hierdurch wird eine Bremse geschaffen, die drehrichtungsabhängig unterschiedliche Bremsmomente realisiert.

Je nach Auslegung und Gebrauchstemperatur kann bei der ersten Drehrichtung 11 der Abschnitt 33 des federelastischen Umschlingungskörpers 15 so gedehnt werden, dass sich ein Querschnitt des Umschlingungskörpers 15 verringert und/oder eine Andruckkraft des Umschlingungskörpers 15 an die Welle 2 zunimmt, wodurch der Umschlingungskörper 15 auf der Welle 2 fest sitzt. Wenn der Abschnitt 34 des federelastischen Umschlingungskörpers 15 so gestaucht wird, dass sich ein Querschnitt des Umschlingungskörpers 15 vergrößert und/oder eine Andruckkraft des Umschlingungskörpers 15 an die Reibfläche 31 zunimmt, dann kann erreicht werden, dass der Umschlingungskörper 15 auf der Reibfläche 31 der Buchse 17 fest sitzt.

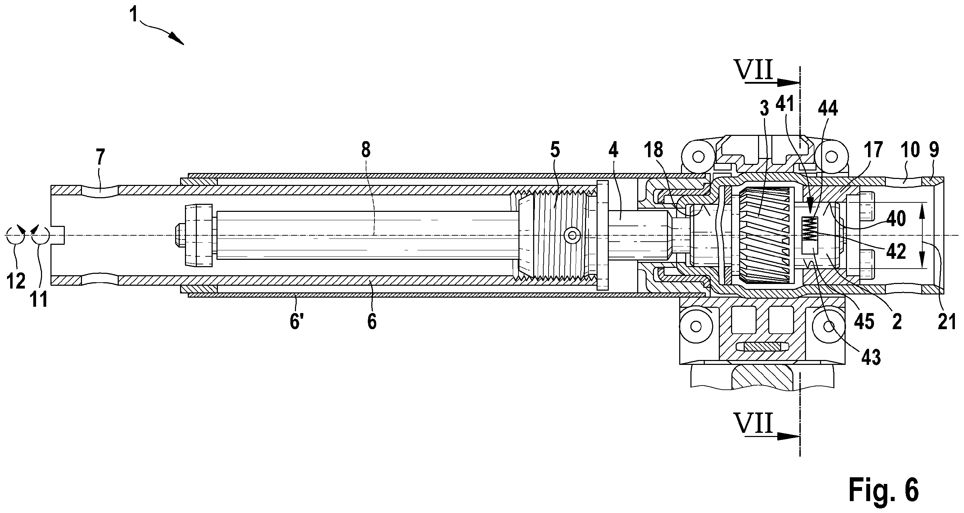

Fig. 6 zeigt ein Getriebe 1 in einer auszugsweisen, axialen, schematischen Schnittdarstellung entsprechend einem dritten Ausführungsbeispiel. In diesem Ausführungsbeispiel ist die Welle 2 an einer Lagerfläche 40 der Buchse 17 gelagert. Die Buchse 17 ist hierbei als Lagerbuchse 17 ausgestaltet. Ferner ist zumindest ein Bremselement 41 vorgesehen, das im Bereich der Lagerfläche 40 angeordnet ist. Hierdurch ist eine Zusammenwirkung des Bremselements 41 mit der Lagerfläche 40 ermöglicht.

Die Welle 2 weist eine Bremselement-Aufnahme 42 auf, die durch eine in der Welle 2 ausgestaltete Aussparung 42 gebildet ist. Das Bremselement 41 ist zumindest teilweise in die Bremselement-Aufnahme 42 eingesetzt. Ein Teil 43 der Lagerfläche 40 dient als Kontaktfläche 43. Mit der Kontaktfläche 43 wirkt das Bremselement 41 zusammen.

Das Bremselement 41 weist eine Feder 44 und einen Bremskeil 45 auf. Hierbei beaufschlagt die Feder 44 den Bremskeil 45 in Richtung auf die Kontaktfläche 43, die Teil der Lagerfläche 40 ist.

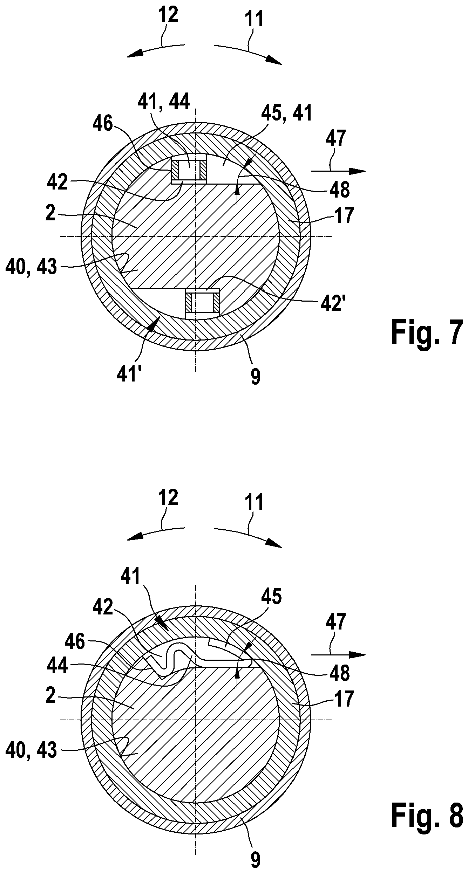

Fig. 7 zeigt eine auszugsweise, schematische Schnittdarstellung durch das in Fig. 6 dargestellte Getriebe 1 des dritten Ausführungsbeispiels entlang der mit VII bezeichneten Schnittlinie. Das Bremselement 41 ist in diesem Ausführungsbeispiel zweiteilig ausgestaltet. Hierbei ist die Feder 44 in der Bremselement-Aufnahme 42 angeordnet. Die Feder 44 stützt sich hierbei an einer Fläche 46 der Welle 2 ab, um den Bremskeil 45 mit einer Federvorspannung zu beaufschlagen. Hierdurch wird der Bremskeil 45 von der Feder 44 in einer Richtung 47 gegen die Kontaktfläche 43 beaufschlagt.

Bei einer in der ersten Drehrichtung 11 erfolgenden Rotation der Welle 2 wird der Bremskeil 45 durch die Zusammenwirkung mit der Kontaktfläche 43 aus der Bremselement-Aufnahme 42 herausgezogen, wodurch eine Andruckkraft des Bremskeils 45 an die Kontaktfläche 43 zunimmt. Der Bremskeil 45 weist hierbei einen Keilwinkel 48 auf. Über eine Vorgabe des Keilwinkels 48 kann das auftretende Bremsmoment innerhalb gewisser Grenzen vorgegeben werden. Der Keilwinkel 48 ist hierbei ausreichend groß gewählt, so dass eine physikalische Selbsthemmung des Bremskeils 45 beim Rotieren in der ersten Drehrichtung 11 verhindert ist.

Wenn sich die Welle 2 in der zweiten Drehrichtung 12 dreht, dann wird der Bremskeil 45 durch die Zusammenwirkung mit der Kontaktfläche 43 entgegen der Richtung 47 in die Bremselement-Aufnahme 42 hineingezogen. Hierdurch reduziert sich die Bremswirkung. Dabei kann es auch zu einer zumindest im Wesentlichen verschwindenden Bremswirkung kommen.

Somit kann drehrichtungsabhängig eine unterschiedliche Bremswirkung realisiert werden. Hierdurch kann eine drehrichtungsabhängige Selbsthemmung erzielt werden.

In vorteilhafter Weise sind an der Welle 2 weitere Bremselemente 41' vorgesehen, die in Bremselement-Aufnahmen 42' der Welle 2 eingesetzt sind. Hierdurch kann die Bremswirkung verbessert werden. Speziell kann durch eine gegenüberliegende Anordnung der Bremselemente 41,41' erreicht werden, dass die Welle 2 zumindest im Wesentlichen von einem Bremsmoment beaufschlagt wird und auf die Welle 2 wirkende Querkräfte, die von einem Lager oder dergleichen aufgenommen werden müssen, vermieden sind.

Fig. 8 zeigt den in Fig. 7 gezeigten Schnitt durch das Getriebe 1 entsprechend einem vierten Ausführungsbeispiel. In diesem Ausführungsbeispiel ist das Bremselement 41 als einstückiges Bremselement 41 ausgestaltet. Hierbei dient ein keilförmiger Teil 45 des Bremselements 41 als Bremskeil 45. Außerdem dient ein federnder Teil 44 des Bremselement 41 als Feder 44. Der federnde Teil 44 beaufschlagt den keilförmigen Teil 45 in der Richtung 47 gegen die Kontaktfläche 43 mit einer Federkraft. Bei stillstehender Welle 2 wird somit eine gewisse Haltekraft erzeugt.

Das Bremselement 41 kann aus einem gebogenen Werkstück gebildet sein. Hierbei kann die Federkonstante der Feder 44 vorgegeben werden. Außerdem kann insbesondere ein Keilwinkel 48 vorgegeben sein.

Bei einer Rotation der Welle 2 in der ersten Drehrichtung 11 wird die Andruckkraft des Bremskeils 45 an die Kontaktfläche 43 vergrößert. Dadurch erhöht sich das auftretende Bremsmoment auf die Welle 2. Umgekehrt nimmt bei einer in der zweiten Drehrichtung 12 rotierenden Welle 2 die Andruckkraft des Bremskeils 45 an die Kontaktfläche 43 ab, so dass ein Bremsmoment verringert und gegebenenfalls zumindest im Wesentlichen aufgehoben ist.

Somit können in Abhängigkeit von der gewählten Drehrichtung 11, 12 unterschiedliche Bremsmomente erzeugt werden.

Die Erfindung ist nicht auf die beschriebenen Ausführungsbeispiele beschränkt.

## Patentansprüche

1. Getriebe (1), insbesondere Schneckengetriebe für Einrichtungen zur fremdkraftbetätigten Verstellung von Elementen eines Kraftfahrzeugs, mit einem Gehäuseteil (9) und einer in dem Gehäuseteil (9) gelagerten Welle (2), die relativ zu dem Gehäuseteil (9) bezüglich einer Drehachse (8) in einer ersten Drehrichtung (11) und einer der ersten Drehrichtung (11) entgegengesetzten zweiten Drehrichtung (12) rotierend antreibbar ist, wobei ein Umschlingungskörper (15) vorgesehen ist, der die Welle (2) umschlingt, dass der Umschlingungskörper (15) als federelastischer Umschlingungskörper (15) ausgestaltet ist, dass eine nach innen orientierte Reibfläche (31) vorgesehen ist und dass der Umschlingungskörper (15) zum Zusammenwirken mit der Reibfläche (31) zumindest abschnittsweise innerhalb der nach innen orientierten Reibfläche (31) angeordnet ist, **und der Umschlingungskörpers (15) in einem Ausgangszustand gegenüber der Welle (2) eine Vorspannung aufweist und gegenüber der Reibfläche (31) eine Vorspannung aufweist, und dadurch gekennzeichnet, dass die im Ausgangszustand vorgesehenen Vorspannungen des Umschlingungskörpers (15) gegenüber der Welle (2) und gegenüber der Reibfläche (31) unterschiedlich groß vorgegeben sind,**
**und bei einer in der ersten Drehrichtung (11) erfolgenden Rotation der Welle (2) der Umschlingungskörper (15) abschnittsweise so gedehnt wird, dass sich ein Querschnitt des Umschlingungskörpers (15) an der Welle (2) verringert und/oder eine Andruckkraft des Umschlingungskörpers (15) an der Welle (2) zunimmt und/oder**
**dass bei einer in der ersten Drehrichtung (11) erfolgenden Rotation der Welle (2) der Umschlingungskörper (15) abschnittsweise so gedehnt wird, dass sich ein Querschnitt des Umschlingungskörpers (15) an der Reibfläche (31) verringert und/oder eine Andruckkraft des Umschlingungskörpers (15) an der Reibfläche (31) abnimmt.**

2. Getriebe nach Anspruch 1,
**dadurch gekennzeichnet,**
**dass** sich bei der in der zweiten Drehrichtung (12) erfolgenden Rotation der Welle (2) der Querschnitt des Umschlingungskörpers (15) so vergrößert, dass ein Spiel (23) zwischen dem Umschlingungskörper (15) und der Welle (2) besteht.

3. Getriebe nach Ansprüche 1 oder 2,
**dadurch gekennzeichnet,**
**dass** der federelastische Umschlingungskörper (15) die Welle (2) mehrfach umschlingt.

4. Getriebe nach einem der Ansprüche 1 bis 3,
**dadurch gekennzeichnet,**
**dass** der federelastische Umschlingungskörper (15) zumindest im Wesentlichen aus einem federelastischen Draht gebildet ist.

5. Getriebe nach einem der Ansprüche 1 bis 4,
**dadurch gekennzeichnet,**
**dass** das Gehäuseteil (9) als Mantelrohr (9) ausgestaltet ist, in dem die Welle (2) zumindest abschnittsweise angeordnet ist
und/oder
**dass** ein Schneckenrad (2) vorgesehen ist, das mit der Welle (2) verbunden oder einstückig mit der Welle (2) ausgestaltet ist.

6. Getriebe nach Anspruch 1,
**dadurch gekennzeichnet,**
**dass** die nach innen orientierte Reibfläche (31) zumindest teilweise als zylindermantelförmige Reibfläche (31) ausgestaltet ist
und/oder
**dass** die nach innen orientierte Reibfläche (31) an einer Reibbuchse (17) ausgestaltet ist und dass die Reibbuchse (17) bezüglich des Gehäuseteils (9), in dem die Welle (2) gelagert ist, drehfest angeordnet ist
und/oder
**dass** die Reibbuchse (17) mit dem Gehäuseteil (9) verbunden ist.

7. Getriebe nach Anspruch 1 bis 6,
**dadurch gekennzeichnet**,
**der federelastische Umschlingungskörper (15) als Rutschkupplung wirkt.**

8. Getriebe nach einem der Ansprüche 1, 6 oder 7,
**dadurch gekennzeichnet,**
**dass** der Umschlingungskörper (15) abschnittsweise an der Welle (2) und gegebenenfalls von der Reibfläche (31) beabstandet und abschnittsweise gegebenenfalls von der Welle (2) beabstandet und an der Reibfläche (31) angeordnet ist
und/oder
**dass** der Umschlingungskörper (15) zumindest in einem Ausgangszustand, in dem an der Welle (2) angeordneten Abschnitt (33) einen kleineren Querschnitt und in dem an der Reibfläche (31) angeordneten Abschnitt (34) einen größeren Querschnitt aufweist und/oder
**dass** bei einer in der zweiten Drehrichtung (12) erfolgenden Rotation der Welle (2) der Umschlingungskörper (15) abschnittsweise so gestaucht wird, dass sich ein Querschnitt des Umschlingungskörpers (15) an der Welle (2) vergrößert und/oder eine Andruckkraft des Umschlingungskörpers (15) an der Welle (2) abnimmt
und/oder
**dass** bei einer in der zweiten Drehrichtung (12) erfolgenden Rotation der Welle (2) der Umschlingungskörper (15) so gestaucht wird, dass sich ein Querschnitt des Umschlingungskörpers (15) an der Reibfläche (31) vergrößert und/oder eine Andruckkraft des Umschlingungskörpers (15) an der Reibfläche (31) zunimmt.

9. Getriebe nach Anspruch **1 bis 8**,
**dadurch gekennzeichnet,**
**dass die jeweils auftretenden Durchrutschmomente in Abhängigkeit der Drehrichtung, nämlich entweder der ersten Drehrichtung (11) oder der zweiten Drehrichtung (12), unterschiedlich ausgelegt sind.**

10. Getriebe nach Anspruch 9,
**dadurch gekennzeichnet,**
**dass eine Bremse geschaffen ist, die drehrichtungsabhängig unterschiedliche Bremsmomente realisiert.**

11. Getriebe nach Anspruch 1,
**dadurch gekennzeichnet,**
**dass** eine Lagerfläche (40) vorgesehen ist, die die Kontaktfläche (43) aufweist, und dass die Welle (2) an der Lagerfläche (40) in dem Gehäuseteil (9) gelagert ist.

## Claims

1. Gearing mechanism (1), in particular worm gearing mechanism for devices for power-operated adjustment of elements of a motor vehicle, having a housing component (9) and a shaft (2) which is mounted in the housing component (9) and can be driven in rotation in relation to the housing component (9) about a rotational axis (8) in a first rotational direction (11) and in a second rotational direction (12) which is opposed to the first rotational direction (11),
wherein a wrap-around body (15) is provided which wraps around the shaft (2), in that the wrap-around body (15) is configured as a spring-elastic wrap-around body (15),
in that an inwardly oriented friction face (31) is provided, and in that the wrap-around body (15) is arranged, for the purpose of interaction with the friction face (31), at least in certain sections within the inwardly oriented friction face (31),
and, in an initial state, the wrap-around body (15) is prestressed with respect to the shaft (2) and prestressed with respect to the friction face (31), and
**characterized**
**in that** the prestresses, provided in the initial state, of the wrap-around body (15) with respect to the shaft (2) and with respect to the friction face (31) are predefined with different magnitudes,
and, when the shaft (2) rotates in the first rotational direction (11), the wrap-around body (15) is stretched in certain sections in such a way that a cross section of the wrap-around body (15) against the shaft (2) decreases and/or a force pressing the wrap-around body (15) against the shaft (2) increases,
and/or
**in that**, when the shaft (2) rotates in the first rotational direction (11), the wrap-around body (15) is stretched in certain sections in such a way that a cross section of the wrap-around body (15) against the friction face (31) decreases and/or a force pressing the wrap-around body (15) against the friction face (31) decreases.

2. Gearing mechanism according to Claim 1,
**characterized**
**in that**, when the shaft (2) rotates in the second rotational direction (12), the cross section of the wrap-around body (15) is increased in such a way that there is a play (23) between the wrap-around body (15) and the shaft (2).

3. Gearing mechanism according to Claim 1 or 2,
**characterized**
**in that** the spring-elastic wrap-around body (15) wraps around the shaft (2) repeatedly.

4. Gearing mechanism according to one of Claims 1 to 3,
**characterized**
**in that** the spring-elastic wrap-around body (15) is formed at least essentially from a spring-elastic wire.

5. Gearing mechanism according to one of Claims 1 to 4,
**characterized**
**in that** the housing component (9) is configured as a casing tube (9) in which the shaft (2) is arranged at least in certain sections,
and/or
**in that** a worm gear (2) is provided which is connected to the shaft (2) or configured in one piece with the shaft (2).

6. Gearing mechanism according to Claim 1,
**characterized**
**in that** the inwardly oriented friction face (31) is configured at least partially as a cylindrical-casing-shaped friction face (31),
and/or
**in that** the inwardly oriented friction face (31) is configured on a friction bushing (17),
and **in that** the friction bushing (17) is arranged in a rotationally fixed fashion with respect to the housing component (9) in which the shaft (2) is mounted,
and/or
**in that** the friction bushing (17) is connected to the housing component (9).

7. Gearing mechanism according to Claim 1 or 6,
**characterized**
**in that** the wrap-around body (15) acts as a slip clutch.

8. Gearing mechanism according to one of Claims 1, 6 or 7,
**characterized**
**in that** the wrap-around body (15) is arranged in certain sections on the shaft (2) and, if appropriate, spaced apart from the friction face (31), and, if appropriate, spaced apart in certain sections from the shaft (2), and on the friction face (31),
and/or
**in that** the wrap-around body (15) has, at least in an initial state, a relatively small cross section in the section (33) arranged against the shaft (2), and a relatively large cross section in the section (34) arranged against the friction face (31),
and/or
**in that**, when the shaft (2) rotates in the second rotational direction (12), the wrap-around body (15) is compressed in certain sections in such a way that a cross section of the wrap-around body (15) against the shaft (2) increases and/or a force pressing the wrap-around body (15) against the shaft (2) decreases,
and/or
**in that**, when the shaft (2) rotates in the second rotational direction (12), the wrap-around body (15) is compressed in such a way that a cross section of the wrap-around body (15) against the friction face (31) increases and/or a force pressing the wrap-around body (15) against the friction face (31) increases.

9. Gearing mechanism according to Claims 1 to 8,
**characterized**
**in that** the respectively occurring slipping torques are configured differently as a function of the rotational direction, specifically either of the first rotational direction (11) or the second rotational direction (12).

10. Gearing mechanism according to Claim 9,
**characterized**
**in that** a brake is provided which implements different braking torques depending on the rotational direction.

11. Gearing mechanism according to Claim 1,
**characterized**
**in that** a bearing face (40), which has the contact face (43), is provided, and in that the shaft (2) is mounted on the bearing face (40) in the housing component (9).

## Revendications

1. Engrenage (1), en particulier engrenage à vis sans fin pour des dispositif destinés au réglage commandé par une force extérieure d'éléments d'un véhicule automobile, comprenant une partie de boîtier (9) et un arbre (2) supporté dans la partie de boîtier (9), qui peut être entraîné en rotation relativement à la partie de boîtier (9) par rapport à un axe de rotation (8) dans un premier sens de rotation (11) et un deuxième sens de rotation (12) opposé au premier sens de rotation (11), un corps d'enveloppement (15) étant prévu, lequel enveloppe l'arbre (2), que le corps d'enveloppement (15) est réalisé sous forme de corps d'enveloppement élastique à ressort (15), qu'une surface de frottement (31) orientée vers l'intérieur est prévue et que le corps d'enveloppement (15), pour coopérer avec la surface de frottement (31), est disposé au moins en partie à l'intérieur de la surface de frottement (31) orientée vers l'intérieur, et le corps d'enveloppement (15) présentant dans un état initial une précontrainte par rapport à l'arbre (2) et une précontrainte par rapport à la surface de frottement (31), et
**caractérisé en ce que**
les précontraintes prévues dans l'état initial du corps d'enveloppement (15) par rapport à l'arbre (2) et par rapport à la surface de frottement (31) sont définies de manière à être différentes l'une de l'autre, et dans le cas d'une rotation de l'arbre s'effectuant dans le premier sens de rotation (11), le corps d'enveloppement (15) est étiré en partie de telle sorte qu'une section transversale du corps d'enveloppement (15) au niveau de l'arbre (2) soit réduite et ou qu'une force de pression du corps d'enveloppement (15) au niveau de l'arbre (2) augmente et **en ce que** dans le cas d'une rotation de l'arbre (2) s'effectuant dans le premier sens de rotation (11), le corps d'enveloppement (15) est étiré en partie de telle sorte qu'une section transversale du corps d'enveloppement (15) au niveau de la surface de friction (31) soit réduite et/ou qu'une force de pressage du corps d'enveloppement (15) au niveau de la surface de friction (31) diminue.

2. Engrenage selon la revendication 1,
**caractérisé en ce que**
dans le cas de la rotation de l'arbre (2) s'effectuant dans le deuxième sens de rotation (12), la section transversale du corps d'enveloppement (15) augmente de telle sorte qu'il existe un jeu (23) entre le corps d'enveloppement (15) et l'arbre (2).

3. Engrenage selon la revendication 1 ou 2,
**caractérisé en ce que**
le corps d'enveloppement élastique à ressort (15) enveloppe l'arbre (2) plusieurs fois.

4. Engrenage selon l'une quelconque des revendications 1 à 3,
**caractérisé en ce que**
le corps d'enveloppement élastique à ressort (15) est formé au moins essentiellement d'un fil élastique à ressort.

5. Engrenage selon l'une quelconque des revendications 1 à 4,
**caractérisé en ce que**
la partie de boîtier (9) est configurée sous forme de tube d'enveloppe (9) dans lequel l'arbre (2) est disposé au moins en partie
et/ou
**en ce qu'**une roue à denture hélicoïdale (2) est prévue, laquelle est connectée à l'arbre (2) ou est configurée d'une seule pièce avec l'arbre (2).

6. Engrenage selon la revendication 1,
**caractérisé en ce que**
la surface de frottement (31) orientée vers l'intérieur est configurée au moins en partie sous forme de surface de frottement en forme d'enveloppe cylindrique (31)
et/ou
**en ce que** la surface de frottement (31) orientée vers l'intérieur est configurée au niveau d'une douille de friction (17) et **en ce que** la douille de friction (17) est disposée de manière solidaire en rotation par rapport à la partie de boîtier (9) dans laquelle l'arbre (2) est supporté et/ou **en ce que** la douille de friction (17) est reliée à la partie de boîtier (9).

7. Engrenage selon les revendications 1 à 6,
**caractérisé en ce que**
le corps d'enveloppement élastique à ressort (15) agit en tant qu'embrayage à friction.

8. Engrenage selon l'une quelconque des revendications 1, 6 ou 7,
**caractérisé en ce que**
le corps d'enveloppement (15) est disposé en partie au niveau de l'arbre (2) et éventuellement à distance de la surface de frottement (31) et en partie éventuellement à distance de l'arbre (2) et au niveau de la surface de frottement (31), et/ou
**en ce que** le corps d'enveloppement (15), au moins dans un état initial, présente dans la portion (33) disposée au niveau de l'arbre (2) une plus petite section transversale et dans la portion (34) disposée au niveau de la surface de frottement (31) une plus grande section transversale
et/ou
**en ce que** dans le cas d'une rotation de l'arbre (2) s'effectuant dans le deuxième sens de rotation (12), le corps d'enveloppement (15) est écrasé en partie de telle sorte qu'une section transversale du corps d'enveloppement (15) au niveau de l'arbre (2) augmente et/ou qu'une force de pression du corps d'enveloppement (15) au niveau de l'arbre (2) diminue
et/ou
**en ce que** dans le cas d'une rotation de l'arbre (2) s'effectuant dans le deuxième sens de rotation (12), le corps d'enveloppement (15) est écrasé de telle sorte qu'une section transversale du corps d'enveloppement (15) au niveau de la surface de frottement (31) augmente et/ou qu'une force de pression du corps d'enveloppement (15) au niveau de la surface de frottement (31) augmente.

9. Engrenage selon les revendications 1 à 8,
**caractérisé en ce que**
les couples de glissement se produisant dans chaque cas sont conçus différemment en fonction du sens de rotation, à savoir soit le premier sens de rotation (11) soit le deuxième sens de rotation (12).

10. Engrenage selon la revendication 9,
**caractérisé en ce**
**qu'**un frein qui produit différents couples de freinage en fonction du sens de rotation est réalisé.

11. Engrenage selon la revendication 1,
**caractérisé en ce**
**qu'**une surface de palier (40) est prévue, laquelle présente la surface de contact (43) et en ce que l'arbre (2) est supporté sur la surface de palier (40) dans la partie de boîtier (9).
